Europäisches Patentamt

European Patent Office

Office européen des brevets

(11) Veröffentlichungsnummer: **0 432 381 A1**

# EUROPÄISCHE PATENTANMELDUNG

(21) Anmeldenummer: 90117576.0

(22) Anmeldetag: 12.09.90

(51) Int. Cl.5 **H01M 8/24, H01M 8/02**

Die Bezeichnung der Erfindung wurde geändert (Richtlinien für die Prüfung im EPA, A-III, 7.3).

(30) Priorität: 12.10.89 CH 3730/89

(43) Veröffentlichungstag der Anmeldung:
19.06.91 Patentblatt 91/25

(84) Benannte Vertragsstaaten:
CH DE FR GB IT LI NL SE

(71) Anmelder: **ASEA BROWN BOVERI AG**

CH-5401 Baden(CH)

(72) Erfinder: **Bossel, Ulf, Dr.**
**Baldeggstrasse 13**
**CH-5400 Baden(CH)**

(54) **Bauteilanordnung zur Stromführung für keramische Hochtemperatur-Brennstoffzellen.**

(57) Bauteilandordnung zur Stromführung zwischen benachbarten ebenen, stapelförmig angeordneten Brennstoffzellen mit keramischem Feststoffelektrolyt (1), bestehend aus einer die gasförmigen Medien Brennstoff ($CH_4$) und Sauerstoffträger ($O_2$) separierenden elektrisch leitenden Trennplatte (7) und beidseits von ihr angeordneten, in der Sauerstoffelektrode (2) und der Brennstoffelektrode (3) fest verankerten Stromkollektoren (5; 10), wobei mindestens der Stromkollektor auf einer Seite lateral parallel zur Plattenebene freibeweglich auf der Trennplatte (7) gleiten kann. Variante: Der sauerstoffseitige Stromkollektor (10) ist auf der Trennplatte (7) fest verankert.

Fig.1

EP 0 432 381 A1

## BAUTEILANORDNUNG ZUR STROMFÜHRUNG FÜR KERAMISCHE HOCHTEMPERATUR-BRENNSTOFFZELLEN

### Technisches Gebiet

Hochtemperatur-Brennstoffzellen zur Umwandlung von chemischer Energie in elektrische Energie. Die elektrochemische Energieumwandlung und die hierzu benötigten Vorichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Im engeren Sinne betrifft die Erfindung eine Bauteilanordnung zur Stromführung zwischen benachbarten flachen, ebenen, stapelförmig angeordneten Hochtemperatur-Brennstoff zellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff ($CH_4$) und Sauerstoffträger ($O_2$) führenden Räume unterteilt ist.

### Stand der Technik

Hochtemperatur-Brennstoffzellen mit keramischem Feststoffelektrolyten sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten.

Im Falle einer stapelförmigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstofelektrode der nächstfolgenden Zelle geleitet werden. Als wesentliche Bauelemente sind für diese Funktion elektrische Verbindungsglieder zu den Elektroden (Stromkollektoren) und Trennplatten (Bipolarplatten) erforderlich.

Die bisher bekannten Bauelemente und deren Anordnungen befriedigen vielfach bezüglich der verwendeten Werkstoffe, der Konstruktion und Fabrikation sowie dem Langzeitverhalten den modernen Anforderungen nicht.

Die bekannten, für Brennstoffzellen verwendeten Grundelemente zeichnen sich meistens durch eine vergleichsweise komplizierte Geometrie aus, die den Bau von kompakten, raumsparenden Anlagen erschwert. Insbesondere fehlt eine für eine optimale Serieschaltung der Einzelzellen vorteilhafte Anordnung, die sich mit einfachen Fabrikationsmitteln realisieren lässt. Dabei sind vor allem Fragen der Kontaktierung und des Stromübergangs nur mangelhaft gelöst.

Es besteht daher ein grosses Bedürfnis nach Weiterentwicklung, Vereinfachung und Rationalisierung des Aufbaus und der Herstellung von stromführenden Grund-Bauelementen und deren optimale gegenseitige Anordnung basierend auf keramischen Hochtemperatur-Brennstoffzellen.

Zum Stand der Technik werden die nachfolgenden Druckschriften genannt:
- O.Antonsen, W.Baukal und W.Fischer, "Hochtemperatur-Brennstoffbatterie mit keramischem Elektrolyten", Brown Boveri Mitteilungen Januar/Februar 1966, Seiten 21-30,
- US-A-4 692 274
- US-A-4 395 468
- W.J.Dollard und W.G.Parker, "An overview of the Westinghouse Electric Corporation solid oxide fuel cell program", Extended Abstracts, Fuel Cell Techno logy and Applications, International Seminar, Den Haag, Niederlande, 26. bis 29. Oktober 1987,
- F.J.Rohr, High-Temperature Fuel Cells, Solid Electrolytes, 1978 by Academic Press, Inc., Seite 431 ff.
- D.C.Fee et al., Monolithic Fuel Cell Development, Argonne National Laboratory, Paper presented at the 1986 Fuel Cell Seminar, Oct. 26 - 29, 1986 Tucson, AZ, U.S. Department of Energy, The University of Chicago.

### Darstellung der Erfindung

Der Erfindung liegt die Aufgabe zugrunde, eine Bauteilanordnung zur Stromführung zwischen benachbarten, ebenen, stapelförmig angeordneten Hochtemperatur-Brennstoffzellen anzugeben, welche einerseits einen guten elektrischen Kontakt sowohl zu den Elektroden der Brennstoffzelle wie zu den übrigen Bauteilen unter sich bei Temperaturen bis zu 1000 °C gewährleistet, wobei eine hohe elektrische Leitfähigkeit sowie ein geringer Kontaktwiderstand garantiert werden soll. Die ganze Anordnung soll ausserdem eine hinreichende Langzeitstabilität aufweisen. Die Bauelemente sollen kostengünstig, reproduzierbar und auswechselbar hergestellt werden können und es ist speziell auf rasche und problemlose Demontierbarkeit zu achten.

Diese Aufgabe wird dadurch gelöst, dass die eingangs erwähnte Bauteilanordnung in der Form realisiert ist, dass eine ebene glatte Trennplatte und beidseits von ihr angeordnete, sowohl in der Sauerstoffelektrode als auch in der Brennstoffelektrode fest verankerte Stromkollektoren vorhanden sind, wobei mindestens der Stromkollektor auf einer Seite lateral parallel zur Plattenebene frei beweglich auf der Trennplatte gleitend ausgeführt ist.

Weg zur Ausführung der Erfindung

Die Erfindung wird anhand der durch Figuren näher erläuterten Ausführungsbeispiele beschrieben.

Dabei zeigt :

Fig. 1 einen schematischen Schnitt/Aufriss durch eine Brennstoffzellenanordnung mit Trennplatte und beidseitig von ihr lateral frei beweglichen Stromkollektoren in Form von gewellten Bändern,

Fig. 2 einen schematischen Schnitt/Aufriss durch eine Brennstoffzellenanordnung mit Trennplatte und beidseitig von ihr lateral frei beweglichen Stromkollektoren aus bandförmigen bzw. drahtförmigen Bauelementen,

Fig. 3 einen schematischen Schnitt/Aufriss durch eine Brennstoffzellenanordnung mit Trennplatte und sauerstoffseitig sowohl in der Trennplatte als auch in der Sauerstoffelektrode fest verankertem drahtförmigen Stromkollektor,

Fig. 4 einen schematischen Schnitt/Aufriss durch eine Brennstoffzellenanordnung mit Trennplatte und sauerstoffseitig sowohl in der Trennplatte als auch in der Sauerstoffelektrode fest verankertem bandförmigen mehrfach gewellten Stromkollektor.

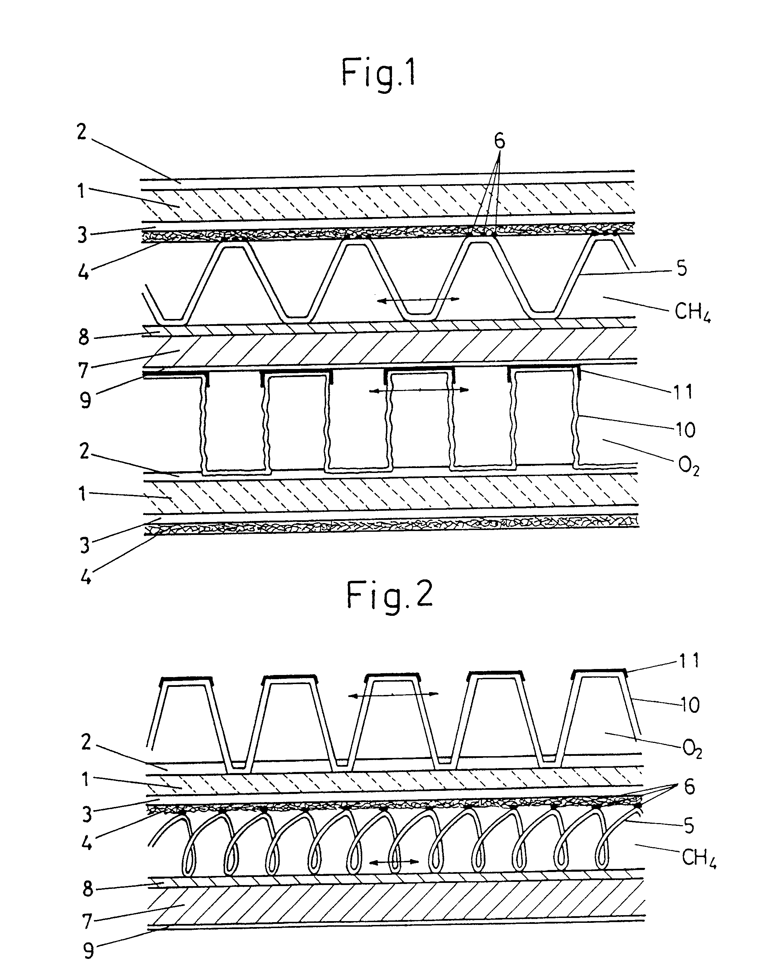

Fig. 1 stellt einen schematischen Schnitt/Aufriss durch eine Brennstoffzellenanordnung mit Trennplatte und beidseitig von ihr lateral frei beweglichen Stromkollektoren in Form von gewellten Bändern dar. Die eigentliche Hochtemperatur-Brennstoffzelle besteht aus dem keramischen Feststoffelektrolyten 1 aus dotiertem, stabilisiertem $ZrO_2$ und der porösen (positiven) Sauerstoffelektrode 2 (La/Mn-Perowskit) sowie der porösen (negativen) Brennstoffelektrode 3 ( $Ni/ZrO_2$-Cermet). 4 ist ein auf die Brennstoffelektrode 3 aufgesintertes, aufgeschweisstes oder aufgelötetes Nickelgewebe (Drahtgeflecht, Filz, Vlies, Metallwolle etc.). 5 stellt den Stromkollektor auf der Brennstoffseite in Form eines trapezartig gewellten Bandes dar, das vorzugsweise aus Ni besteht. 6 ist eine punktförmige Löt/Schweissverbindung zwischen dem brennstoffseitigen Stromkollektor 5 und dem Nickelgewebe 4. 7 stellt eine gasdichte, elektrisch leitende Trennplatte aus einer oxydationsbeständigen Hochtemperaturlegierung dar. Es kommen dafür grundsätzlich Nickel-, Kobalt- oder Eisenlegierungen in Frage. Im vorliegenden Fall trägt die Trennplatte 7 auf der Brennstoffseite eine Nikkelplattierung 8 als Kontakt vermittelnde Oberflächenschicht für gleitende Berührung mit dem brennstoffseitigen Stromkollektor 5. Die dem letzteren ermöglichte laterale freie Beweglichkeit parallel zur Plattenebene ist durch einen Doppelpfeil angedeutet. 9 stellt eine dünne Edelmetallplattierung auf der Sauerstoffseite der Trennplatte 7 dar. Sie besteht in der Regel aus Au, einem Pt-Metall oder einer entsprechenden Legierung. 10 ist der Stromkollektor auf der Sauerstoffseite in Form eines rechteckig gewellten Bandes, der im allgemeinen aus einer warmfesten Nickel- oder Eisenlegierung besteht. Auf der Kontakt- und Berührungsfläche zur Trennplatte 7 trägt der Stromkollektor eine Edelmetallbeschichtung 11, bestehend aus einem Pt-Metall. Die laterale freie Beweglichkeit parallel zur Plattenebene ist durch je einen Doppelpfeil angedeutet. Der Stromkollektor 10 ist auf der Sauerstoffseite fest und elektrisch leitend in die Sauerstoffelektrode 2 eingebettet. Das Symbol $CH_4$ steht allgemein für den vom gasförmigen Brennstoff durchfluteten, das Symbol $O_2$ für den vom gasförmigen Sauerstoffträger (Luft) durchfluteten Raum der Brennstoffzelle.

In Fig. 2 ist ein schematischer Schnitt/Aufriss durch eine Brennstoffzellenanordnung mit Trennplatte und beidseitig von ihr lateral frei beweglichen Stromkollektoren aus bandförmigen bzw. drahtförmigen Bauelementen dargestellt. Im Prinzip entsprechen die Bezugszeichen 1 bis 11 denjenigen der Fig. 1. Der Stromkollektor 10 auf der Sauerstoffseite hat hier die Form eines trapezförmig gewellten Bandes. Die Scheitel der Welle, die der Trennplatte zugewandt sind und an ihren Kontaktflächen zu der letzteren die Edelmetallbeschichtung 11 tragen, sind weiter ausgeführt, als die gegenüberliegenden, in die Sauerstoffelektrode 2 eingebetteten Scheitel. Der Stromkollektor 5 auf der Brennstoffseite ist hier in Form eines verhältnismässig lockeren Wendels ausgeführt, dessen Windungen zur Längsachse leicht schief stehen. Die laterale freie Beweglichkeit der Stromkollektoren 5 und 10 parallel zur Plattenebene ist wieder durch je einen Doppelpfeil angedeutet.

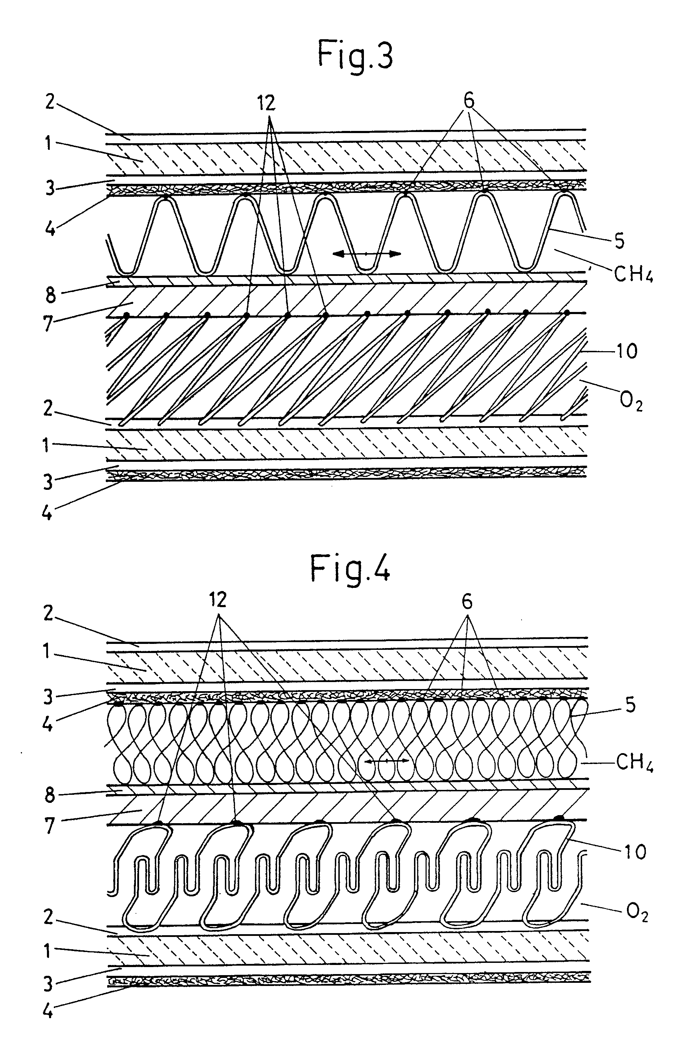

Fig. 3 bezieht sich auf einen schematischen Schnitt/Aufriss durch eine Brennstoffzellenanordnung mit Trennplatte und sauerstoffseitig sowohl in der Trennplatte als auch in der Sauerstoffelektrode fest verankertem drahtförmigen Stromkollektor. Die Bezugszeichen 1 bis 8 entsprechend genau denjenigen der Fig. 1. In dieser Ausführung fehlt die Edelmetallplattierung 9 auf der Sauerstoffseite der Trennplatte 7. Desgleichen fehlt die Edelmetallbeschichtung 11 der Kontakt/Berührungsfläche des sauerstoffseitigen Stromkollektors 10. Stattdessen ist letzterer über punktförmige Löt-oder Schweissverbindungen 12 fest mechanisch kraftschlüssig und elektrisch leitend auf der Trennplatte 7 verankert. Der Stromkollektor 10 hat hier die Form eines dünndrahtigen Wendels mit zur Längsachse der Schraubenlinie stark schief gestellten, abgeplatteten Windungen, der sowohl auf der Seite der Trennplatte 7 (Punktförmige Verbindungen 12) als auch auf der Seite der Sauerstoffelektrode 2 (Einbettung) total eingespannt ist. Der Drahtdurchmesser des Stromkollektors 10 ist in der Figur stark übertrieben dargestellt. Der Stromkollektor 5 auf der Brennstoffseite ist hier in Form eines dünnen sinusförmig gewellten Bandes ausgeführt. Seine laterale Beweglichkeit parallel zur Plattenebene ist durch einen Doppelpfeil angedeutet.

In Fig. 4 ist ein schematischer Schnitt/Aufriss durch eine Brennstoffzellenanordnung mit Trennplatte und sauerstoffseitig sowohl in der Trennplatte als auch in der Sauerstoffelektrode fest verankerten bandförmig mehrfach gewellten Stromkollektoren dargestellt. Grundsätzlich entsprechen die Bezugszeichen denjenigen der Fig. 3. Der Stromkollektor 5 auf der Brennstoffseite ist hier in Form einer lockeren Metallwolle bzw. eines Metallgestricks ausgeführt und über punktförmige Lötverbindungen mit dem Nickelgewebe 4 fest zu einem einheitlichen Ganzen vereinigt. Die laterale Beweglichkeit einzelner wellenähnlicher Teile des Stromkollektors 5 ist durch einen Doppelpfeil angedeutet. Der Stromkollektor 10 auf der Sauerstoffseite ist in Form eines doppelt gewellten dünnen Bandes ausgeführt.

Einer sinusähnlichen, schiefen Hauptwelle ist im bereich des Nulldurchganges eine Nebenwelle kleinerer Amplitude und kleinerer Wellenlänge überlagert. Dadurch entsteht ein Gebilde, das bei gegenüber Steifigkeit senkrecht zur Plattenebene eine hohe Elastizität parallel zu letzterer aufweist, so dass die Kräfte an den Einspannstellen (Sauerstoffelektrode 2 und Trennplatte 7) klein gehalten werden. Dank der totalen Einspannung auf beiden Seiten braucht der Stromkollektor 10 ohnehin keinerlei Kontaktdruckkräfte zu übertragen; er dient allein der elektrischen Stromübertragung. Er kann deshalb aus weniger warmfestem Werkstoff ausgeführt werden.

Ausführungsbeispiel 1:

Siehe Fig. 1!

Eine Bauteilanordnung zur Stromführung wurde aus folgenden Einzelteilen aufgebaut:
Nickelgewebe auf der Brennstoffelektrode Stromkollektor, Brennstoffseite Trennplatte Stromkollektor, Sauerstoffseite

Die eigentliche Brennstoffzelle bestand aus einer flachen, ebenen Platte mit dem zentral angeordneten Feststoffelektrolyten 1 aus stabilisiertem $ZrO_2$, einer aufgesinterten Sauerstoffelektrode 2 aus La/Mn-Perowskit und einer ebenfalls aufgesintereten Brennstoffelektrode 3 aus einem $Ni/ZrO_2$-Cermet. Auf letztere wurde ein Nickelgewebe 4 (Drahtdurchmesser 0,03 mm; Maschenweite 0,25 mm) mit Hilfe eines den Schmelzpunkt erniedrigenden Sinteradditivs grossflächig aufgesintert.

Der brennstoffseitige Stromkollektor 5 bestand aus einem trapezförmig gewellten Band aus Nickel mit folgenden Abmessungen:
Dicke = 0,15 mm
Breite = 1,8 mm
Wellenlänge = 2 mm
Amplitude = 0,75 mm

Der Stromkollektor 5 wurde an den Scheitelpunkten einer Seite über punktförmige Lötverbindungen 6 mit dem Nickelgewebe 4 zu einem einheitlichen Ganzen vereinigt. Zu einem Zweck wurde ein Nickellot mit geringem Zusätzen an Ag, Cr und Si verwendet, dessen Schmelzpunkt ca. 100 °C unter demjenigen von Reinnickel lag.

Die gasdichte, elektrisch leitende Trennplatte 7 bestand aus einem 0,35 mm dicken blanken Blech aus einer oxydationsbeständigen Eisenbasislegierung mit der Werkstoffnummer 1.4762 gemäss Deutscher Norm DIN mit der Bezeichnung X10CrAl124 und der nachfolgenden Zusammensetzung:
Cr = 24 Gew.-%
Al = 1,5 Gew.-%
Si = 0,9 Gew.-%
Mn = 0,8 Gew.-%
C = 0,10 Gew.-%
Fe = Rest

Dieser Trägerwerkstoff der Trennplatte 7 wurde auf der Brennstoffseite elektrochemisch mit einer 30 μm dicken Nickelplattierung 8 versehen. Auf der Sauerstoffseite wurde in gleicher Weise galvanisch eine Edelmetallplattierung 9 in Form einer Au-Schicht von 5 μm Dicke aufgebracht.

Der sauerstoffseitige Stromkollektor 10 bestand aus einem rechteckförmig gewellten Band, das in den senkrechten Partien (Stegen) zusätzlich fein gewellt war. Die Abmessungen der Hauptwelle waren die folgenden:

Dicke = 0,10 mm

Breite = 2 mm

Wellenlänge = 3,5 mm

Amplitude = 1,4 mm

Als Werkstoff wurde eine oxyddispersionsgehärtete Nickelbasis-Superlegierung mit dem Handelsnamen MA 754 von Inco mit der nachfolgenden Zusammensetzung gewählt:

Cr = 20,0 Gew.-%

Al = 0,3 Gew.-%

Ti = 0,5 Gew.-%

C = 0,08 Gew.-%

$Y_2O_3$ = 0,6 Gew.-%

Ni = Rest

Der Stromkollektor 10 wurde an den flachen, der Trennplatte 7 zugewandten Scheiteln der rechteckförmigen Welle mit einer Edelmetallbeschichtung 11 in Form einer Pt-Auflage von 3 $\mu$m Dicke versehen. Diese Schicht wurde nach vorheriger 0,5 $\mu$m dicker Vergoldung elektrochemisch aufgebracht. Die Edelmetallbeschichtung 11 gewährleistet einen einwandfreien Stromübergang an der Kontakt/Berührungs-Fläche Stromkollektor/Trennplatte im Betrieb. Die der Sauerstoffelektrode 2 zugewandten aufgerauhten flachen Scheitel des Stromkollektors 10 wurden im La/Mn-Perowskit der Elektrode eingebettet bzw. aufgesintert, wobei geeignete Sinteradditive und eine reduzierende bis neutrale Sinteratmosphäre gewählt wurden.

Nach erfolgtem Zusammenbau und mechanischer sowie thermischer Belastung konnte festgestellt werden, dass die Stromkollektoren 5 und 10 in Richtung senkrecht zur Plattenebene eine geringe Durchfederung aufwiesen, sich jedoch im allgemeinen vergleichsweise steif verhielten während sie sich in lateraler Richtung parallel zur Plattenebene auf der Trennplatte 7 frei gleitend bewegen konnten.

Ausführungsbeispiel 2:

Siehe Fig. 2!

Der Aufbau der Bauteilanordnung zur Stromführung war grundsätzlich der gleiche wie in Beispiel 1.

Das Nickelgewebe 4 bestand diesmal aus mehr oder weniger verfilzten sehr dünnen Drähten und wurde analog Beispiel 1 auf der Brennstoffelektrode 3 grossflächig aufgesintert. Der brennstoffseitige Stromkollektor 5 bestand aus einem vergleichsweise lockeren Wendel aus Nickeldraht, dessen Windungen zur Längsachse leicht schief standen. Die Abmessungen waren die folgenden:

Drahtdurchmesser = 0,30 mm

Windungsdurchmesser = 1,5 mm

Steigung = 1 mm

Schiefstellung der Windung gegenüber Normalebene ca. 15°

Der Stromkollektor wurde an den betreffenden Scheitelpunkten der Windungen über punktförmige Lötverbindungen 6 mit dem Nickelgewebe (Filz) zu einem Ganzen zusammengestellt.

Die gasdichte Trennplatte 7 bestand aus einem 0,4 mm dicken Blech aus einer oxyddispersionsgehärteten Eisenbasislegierung mit der Handelsbezeichnung MA 956 von Inco mit der folgenden Zusammensetzung:

Cr = 20,0 Gew.-%

Al = 4,5 Gew.-%

Ti = 0,5 Gew.-%

$Y_2O_3$ = 0,5 Gew.-%

Fe Rest

Der Trägerwerkstoff dieser Trennplatte 7 wurde auf der Brennstoffseite elektrochemisch mit einer 40 $\mu$m dicken Nickelplattierung 8 versehen. Auf der Sauerstoffseite wurde elektrochemisch eine Edelmetallplattierung 9 in Form einer Au Pd-Legierung mit 20 Gew.-% Pd aufgebracht, indem mehrere Au- und Pd-Schichten nacheinander abgeschieden und das Ganze dann während 1 2 h bei 900 °C einer Diffusionsglühung unter Vakuum unterworfen wurde. Die fertige Edelmetallplattierung wies eine Schichtdicke von 6 $\mu$m auf. Der Vorteil dieser Au/Pd-Legierung liegt im gegenüber reinem Au um ca. 300 °C höheren Schmelzpunkt (Solidustemperatur).

Der sauerstoffseitige Stromkollektor 10 bestand aus einem trapezförmig gewellten Band mit folgenden Abmessungen:

Dicke = 0,15 mm

Breite = 2,4 mm

Wellenlänge = 3 mm

Amplitude = 1,5 mm

Als Werkstoff diente eine modifizierte oxyddispersionsgehärtete Nickelbasis-Superlegierung mit der nachfolgenden Zusammensetzung:

Cr = 17,0 Gew.-%

Al = 1,5 Gew.-%

Mo = 2,0 Gew.-%

W = 3,5 Gew.-%

Ta = 2,0 Gew.-%

Zr = 0,15 Gew.-%

B = 0,01 Gew.-%

C = 0,05 Gew.-%

$Y_2O_3$ = Gew.-%

Ni = Rest

Der Stromkollektor 10 wurde an den flachen, der Trennplatte 7 zugewandten Scheiteln der trapezförmigen Welle mit einer Edelmetallbeschichtung 11 in Form einer Pt/Pd-Auflage von 5 $\mu$m Dicke versehen. Die Pt/Pd-Legierung enthielt 50 Gew.-% Pt und 50 Gew.-% Pd und wurde elektrochemisch nach vorheriger 0,5 $\mu$m dicker Vergol-

dung abgeschieden. Die der Sauerstoffelektrode 2 zugewandten schmalen flachen Scheitel des Stromkollektors 10 wurden im La/Mn-Perowskit der Elektrode eingebettet und durch Sintern fest verankert.

Der Stromkollektor 10 war in Richtung senkrecht zur Plattenebene vergleichsweise steif, während der Stromkollektor 5 unter der Belastung verhältnismässig stark einfederte. Beide Stromkollektoren konnten sich parallel zur Plattenebene lateral auf der Trennplatte 7 gleitend frei bewegen.

Ausführungsbeispiel 3:

Siehe Fig. 3!

Der Aufbau der Bauteilanordnung war ähnlich wie in Beispiel 1, wobei jedoch der Stromkollektor 10 auf der Sauerstoffseite sowohl in der Sauerstoffelektrode 2 wie auf der Trennplatte 7 verankert war. Das Nickelgewebe 4 bestand aus einem Drahtgeflecht ähnlichen Aufbaus und ähnlicher Abmessungen wie in Beispiel 1. Es wurde grossflächig auf der Brennstoffelektrode 3 aufgesintert.

Der brennstoffseitige Stromkollektor 5 bestand aus einem sinusförmig gewellten Band aus einer Nickelbasis-Superlegierung mit dem Handelsnamen Inconel 600 mit der nachfolgenden Zusammensetzung:

Cr = 15,5 Gew.-%
Fe = 8,0 Gew.-%
Mn = 0,5 Gew.-%
Si = 0,2 Gew.-%
C = 0,08 Gew.-%
Ni = Rest

Die Abmessungen der Welle waren die folgenden:

Dicke = 0,08 mm
Breite = 2,5 mm
Wellenlänge = 1,5 mm
Amplitude = 0,7 mm

Der Stromkollektor 5 wurde an den Scheitelpunkten einer Seite über punktförmige Lötverbindungen 6 mit dem Nickelgewebe 4 verbunden.

Die Trennplatte 7 bestand aus einem 0,3 mm dicken blanken Blech aus einer oxydationsbeständigen Nickelbasis-Superle gierung mit der Handelsbezeichnung Nimonic 75 mit der nachfolgenden Zusammensetzung:

Cr = 19,5 Gew.-%
Ti = 0,4 Gew.-%
Fe = 3,0 Gew.-%
Mn = 0,3 Gew.-%
Si = 0,3 Gew.-%
C = 0,10 Gew.-%
Ni = Rest

Der Trägerwekstoff der Trennplatte 7 wurde auf der Brennstoffseite elektrochemisch mit einer 35 μm dicken Nickelplattierung 8 versehen. Die Sauerstoffseite blieb unverändert, d.h. ohne Plattierung. Hingegen wurde sie gesäubert, gebeizt und vor der Weiterverarbeitung auf Hochglanz poliert.

Der sauerstoffseitige Stromkollektor 10 bestand aus einem dünndrähtigen Wendel mit zur Längsachse der Schraubenlinie stark schief gestellten, abgeplatteten Windungen. Die Abmessungen waren die folgenden:

Drahtdurchmesser = 0,18 mm
Windungsdurchmesser = 3 mm
Steigung = 0,8 mm
Schiefstellung der Windung gegenüber Normalebene ca. 45°

Als Werkstoff wurde eine oxydationsbeständige Eisenbasislegierung mit der Werkstoffnummer 1.4742 gemäss Deutscher Norm DIN mit der Bezeichnung X10CrAl18 und der nachfolgenden Zusammensetzung verwendet:

Cr = 18 Gew.-%
Al = 1,0 Gew.-%
Si = 0,9 Gew.-%
Mn = 0,8 Gew.-%
C = 0,10 Gew.-%
Fe = Rest

Der Stromkollektor 10 wurde an den der Trennplatte 7 zugewandten Scheiteln der Windungen durch punktförmige Schweissverbindungen 12 mit der Trennplatte 7 elektrisch leitend und mechanisch kraftschlüssig fest verankert. Die der Sauerstoffelektrode 2 zugewandten Scheitel der Windungen wurden im La/Mn-Perowskit der Elektrode eingebettet und durch Sintern befestigt.

Der Stromkollektor 10 war dank der Schiefstellung der Windungen des Wendels trotz beidseitiger Einspannung sowohl in Richtung senkrecht zur Plattenebene als auch parallel zur letzteren bemerkenswert elastisch. Da weder auf die Sauerstoffelektrode 2 noch auf die Trennplatte 7 ein Kontaktdruck zur guten Stromübertragung notwendig ist, kann die Federkonstante des Stromkollektors 10 beliebig klein sein.

Ausführungsbeispiel 4:

Siehe Fig. 4!

Der Aufbau der Bauteilanordnung zur Stromführung war prinzipiell der gleiche wie in Beispiel 3. Das Nickelgewebe 4 bestand aus einem filz- bzw. metallwolleartigen Vlies und wurde analog Beispiel 1 auf der Brennstoffelektrode 3 grossflächig aufgesintert (Diffusionsschweissung).

Der brennstoffseitige Stromkollektor 5 bestand aus einer Art Metallwolle (Metallgestrick), hergestellt aus zopfartig geflochtenen dünnen Nickeldrähten. Die Abmessungen waren die folgenden:

Drahtdurchmesser = 0,05 mm

Totale Höhe des Vlieses = 1,8 mm

Der Stromkollektor 5 wurde an zahlreichen Berührungspunkten über punktförmige Lötverbindungen unter Verwendung eines gut benetzenden Nikkellots mit einem Schmelzpunkt von ca. 1300 °C mit dem Nickelgewebe 4 verbunden.

Die Trennplatte 7 bestand aus einem 0,35 mm dicken blanken Blech aus einer oxyddispersionsgehärteten Nickelbasis-Superlegierung mit niedrigem Al- und Ti-Gehalt mit dem Handelsnamen MA 754 von Inco mit nachfolgender Zusammensetzung:

Cr = 20,0 Gew.-%
Al = 0,3 Gew.-%
Ti = 0,5 Gew.-%
C = 0,05 Gew.-%
$Y_2O_3$ = 0,6 Gew.-%
Ni = Rest

Der Trägerwerkstoff der Trennplatte 7 wurde auf der Brennstoffseite galvanisch mit einer 25 $\mu$m dicken Nickelplattierung 8 versehen. Die Sauerstoffseite blieb unverändert.

Der sauerstoffseitige Stromkollektor 10 bestand aus einem doppelt gewellten dünnen Band. Einer sinusähnlichen, schiefen Hauptwelle war im Bereich des Nulldurchganges eine Nebenwelle kleinerer Amplitude und kleinerer Wellenlänge überlagert. Die Abmessungen der Hauptwelle waren die folgenden:

Banddicke = 0,12 mm
Bandbreite = 2,2 mm
Wellenlänge = 3 mm
Amplitude = 1,6 mm
Schiefstellung der Windung gegenüber Normalebene ca. 30°

Als Werkstoff diente eine oxidationsbeständige Fe/Cr/Al-Legierung mit der Werkstoffnummer 1.4767 gemäss Deutscher Norm DIN mit der Bezeichnung CrAl20 5 und der nachfolgenden Zusammensetzung:

Cr = 20 Gew.-%
Al = 5 Gew.-%
Si = 0,6 Gew.-%
Mn = 0,8 Gew.-%
C = 0,08 Gew.-%
Fe = Rest

Der Stromkollektor 10 wurde an den der Trennplatte 7 zugewandten Scheiteln der Hauptwelle durch punktförmige Ni/Cr-Lötverbindungen 12 mit der Trennplatte 7 elektrisch leitend verbunden. Die der Sauerstofelektrode 2 zugewandten Scheitel der Hauptwelle wurden im La/Mn-Perowskit der Elektrode eingebettet und fest verankert.
Dank der Doppelwellenausführung war der Stromkollektor in beiden Hauptrichtungen (senkrecht zur Plattenebene und parallel dazu) sehr elastisch. Es gilt das unter Beispiel 3 Gesagte.

Um die Langzeitstabilität der einzelnen Bauteile, insbesondere der Edelmetallbeschichtungen (Plattierung 9 auf der Sauerstoffseite der Trennplatte 7; Beschichtung 11 an der Kontakt Berührungsfläche des Stromkollektors 10 mit der Trennplatte 7) zu erhöhen, ist es vorteilhaft, bei allen Beispielen 1 bis 4 zwischen dem Grundkörper (Trägermetall) und der Edelmetall-Oberflächenschicht eine Diffusionssperrschicht auf der Basis einer Silizium enthaltenden intermetallischen Verbindung vorzusehen. Derartige Sperrschichten werden im allgemeinen durch Flammspritzen, Plasmaspritzen, in seltenen Fällen (da teuer!) durch Kathodenzerstäubung auf das Trägermetall aufgebracht. Vorzugsweise wurde zu diesem Zweck ein Nickelsilizid verwendet. Durch diese Massnahmen wird vor allem die Diffusion des Edelmetalls in das darunter liegende Trägermetall hinein stark verzögert oder praktisch ganz unterbunden.

Die Erfindung ist nicht auf die Ausführungsbeispiele beschränkt.

Die Bauteilanordnung zur Stromführung zwischen benachbarten flachen, ebenen, stapelförmig angeordneten Hochtemperatur-Brennstoffzellen mit Feststoffelektrolyt 1 auf der Basis von dotiertem, stabilisiertem Zirkonoxyd, wobei jeweils die Sauerstoffelektrode 2 der einen Brennstoffzelle mit der Brennstoffelektrode 3 der nächstfolgenden Brennstoffzelle elektrisch verbunden und der zwischen den Elektroden 2; 3 liegende Zwischenraum durch eine gasdichte, elektrisch leitende Trennplatte 7 in zwei, die unterschiedlichen gasförmigen Medien Brennstoff $CH_4$ und Sauerstoffträger $O_2$ führenden Räume unterteilt ist, besteht allgemein darin, dass eine ebene glatte Trennplatte 7 und beidseits von ihr angeordnete, sowohl in der Sauerstoffelektrode 2 als auch in der Brennstoffelektrode 3 fest verankerte Stromkollektoren 5; 10 vorhanden sind, wobei mindestens der Stromkollektor auf einer Seite lateral parallel zur Plattenebene frei beweglich auf der Trennplatte 7 gleitend ausgeführt ist. Vorzugsweise besteht die Bauteilanordnung aus der Trennplatte 7 aus einer warmfesten Hochtemperaturlegierung, die auf der Sauerstoffseite mit einem Edelmetall 9 oder einer Edelmetall-Legierung und auf der Brennstoffseite mit Nickel 8 oder einer hochprozentigen Nickellegierung plattiert ist, wobei der Stromkollektor 10 auf der Sauerstoffseite aus einer oxidationsbeständigen warmfesten Legierung besteht, die mindestens an den Berührungsstellen mit der Trennplatte 7 mit einem Edelmetall 11 beschichtet und an ihrer gegenüberliegenden Seite fest in die aus La/Mn-Perowskit bestehende Sauerstoffelektrode 2 eingebettet ist und dass ferner der Stromkollektor 5 auf der Brennstoffseite aus Nickel oder einer hochprozentigen Nickellegierung besteht und über ein Nickelgewebe 4 durch eine Löt-, Schweiss- oder Sinterverbindung 6 fest mit der aus einem Ni/$ZrO_2$-Cermet bestehenden Brennstoffelektrode 3 verbunden ist.

In einer speziellen Ausführung der Bauteilanordnung ist der Stromkollektor 10 auf der Sauerstoffseite über die mit Edelmetall beschichteten Berührungsstellen mit der Trennplatte durch eine Löt-, Schweiss- oder Sinterverbindung 12 fest verbunden.

Die Bauteilanordnung besteht vorteilhafterweise darin, dass der Stromkollektor 10 auf der Sauerstoffseite aus einem Träger aus einer Eisenbasis- oder einer Nickelbasis-Superlegierung mit oder ohne Dispersionshärtung besteht und dass mindestens die mit einem Edelmetall, ausgewählt aus der Gruppe Au, Pd, Pt, Rh oder einer Legierung mindestens zweier dieser Elemente, beschichteten Stellen zwischen Trägermetall und Edelmetallbeschichtung 9 eine Diffusionssperrschicht auf der Basis einer Silizium enthaltenden intermetallischen Verbindung aufweisen. Die Stromkollektoren 5; 10 weisen die Form von einfach oder mehrfach gewellten, geknickten oder plissierten Bändern oder von Drahtwendeln, Drahtgeflechten, Metallgeweben oder von Metallfilzen oder Vliesen auf.

## Ansprüche

1. Bauteilanordnung zur Stromführung zwischen benachbarten flachen, ebenen, stapelförmig angeordneten Hochtemperatur-Brennstoffzellen mit Feststoffelektrolyt (1) auf der Basis von dotiertem, stabilisiertem Zirkonoxyd, wobei jeweils die Sauerstoffelektrode (2) der einen Brennstoffzelle mit der Brennstoffelektrode (3) der nächstfolgenden Brennstoffzelle elektrisch verbunden und der zwischen den Elektroden (2; 3) liegende Zwischenraum durch eine gasdichte, elektrisch leitende Trennplatte (7) in zwei, die unterschiedlichen gasförmigen Medien Brennstoff (CH$_4$) und Sauerstoffträger (O$_2$) führenden Räume unterteilt ist, dadurch gekennzeichnet, dass eine ebene glatte Trennplatte (7) und beidseits von ihr angeordnete, sowohl in der Sauerstoffelektrode (2) als auch in der Brennstoffelektrode (3) fest verankerte Stromkollektoren (5; 10) vorhanden sind, wobei mindestens der Stromkollektor auf einer Seite lateral parallel zur Plattenebene frei beweglich auf der Trennplatte (7) gleitend ausgeführt ist.

2. Bauteilanordnung nach Anspruch 1, dadurch gekennzeichnet, dass die Trennplatte (7) aus einer warmfesten Hochtemperaturlegierung besteht, die auf der Sauerstoffseite mit einem Edelmetall (9) oder einer Edelmetall-Legierung und auf der Brennstoffseite mit Nickel (8) oder einer hochprozentigen Nickellegierung plattiert ist, und dass der Stromkollektor (10) auf der Sauerstoffseite aus einer oxydationsbeständigen warmfesten Legierung besteht, die mindestens an den Berührungsstellen mit der Trennplatte (7) mit einem Edelmetall (11) beschichtet und an ihrer gegenüberliegenden Seite fest in die aus La/Mn-Perowskit bestehende Sauerstoffelektrode (2) eingebettet ist, dass ferner der Stromkollektor (5) auf der Brennstoffseite aus Nickel oder einer hochprozentigen Nickellegierung besteht und über ein Nickelgewebe (4) durch eine Löt-, Schweiss- oder Sinterverbindung (6) fest mit der aus einem Ni/ZrO$_2$-Cermet bestehenden Brennstoffelektrode (3) verbunden ist.

3. Bauteilanordnung nach Anspruch 2, dadurch gekennzeichnet, dass der Stromkollektor (10) auf der Sauerstoffseite über die mit Edelmetall beschichteten Berührungsstellen mit der Trennplatte durch eine Löt-, Schweiss- oder Sinterverbindung (12) fest verbunden ist.

4. Bauteilanordnung nach Anspruch 2 oder 3, dadurch gekennzeichnet, dass der Stromkollektor (10) auf der Sauerstoffseite aus einem Träger aus einer Eisenbasis-oder einer Nickelbasis-Superlegierung mit oder ohne Dispersionshärtung besteht und dass mindestens die mit einem Edelmetall, ausgewählt aus der Gruppe Au, Pd, Pt, Rh oder einer Legierung mindestens zweier dieser Elemente, beschichteten Stellen zwischen Trägermetall und Edelmetallbeschichtung (9) eine Diffusionssperrschicht auf der Basis einer Silizium enthaltenden intermetallischen Verbindung aufweisen.

5. Bauteilanordnung nach einem der vorangegangenen Ansprüche, dadurch gekennzeichnet, dass die Stromkollektoren (5; 10) die Form von einfach oder mehrfach gewellten, geknickten oder plissierten Bändern oder von Drahtwendeln, Drahtgeflechten, Metallgeweben oder von Metallfilzen oder Vliesen aufweisen.

# Fig.1

# Fig.2

# Fig.3

# Fig.4

# EUROPÄISCHER RECHERCHENBERICHT

**Europäisches Patentamt**

Nummer der Anmeldung

**EP 90 11 7576**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A-4 907 42   (BROWN & BOVERI)<br>— — — | | H 01 M<br>8/24<br>H 01 M 8/02 |
| A | FR-A-2 296 703   (COMMISSARIAT A L'ENERGIE ATOMI-QUE)<br>* Figur 2; Seite 7, Zeilen 21-39 *<br>— — — | | |
| A | PATENT ABSTRACTS OF JAPAN, Band 10, Nr. 175 (E-413)[2231], 20. Juni 1986;<br>& JP-A-61 24 158 (MITSUBISHI DENKI K.K.) 01-02-1986<br>— — — | | |
| A | PATENT ABSTRACTS OF JAPAN, Band 11, Nr. 138 (E-503)[2585], 2. Mai 1987;<br>& JP-A-61 279 068 (ISHIKAWAJIMA HARIMA HEAVY IND. CO., LTD) 09-12-1986<br>— — — | | |
| A | PATENT ABSTRACTS OF JAPAN, Band 10, Nr. 289 (E-442)[2345], 2. Oktober 1986;<br>& JP-A-61 109 262 (HITACHI LTD) 27-05-1986<br>— — — | | |
| A | US-A-3 300 344   (D.T. BRAY et al.)<br>— — — — — | | |

| RECHERCHIERTE SACHGEBIETE (Int. Cl.5) |
|---|
| H 01 M |

Der vorliegende Recherchenbericht wurde für alle Patentansprüche erstellt

| Recherchenort | Abschlußdatum der Recherche | Prüfer |
|---|---|---|
| Den Haag | 14 Januar 91 | D'HONDT J.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument